# FASCICULE DE BREVET EUROPEEN

(11) **EP 2 374 341 B1**
(45) Date de publication et mention de la délivrance du brevet: **04.09.2013**
(21) Numéro de dépôt: 11160880.8
(22) Date de dépôt: 01.04.2011
(51) Int. Cl.: A01B 15/02

(54) **Soc pour lame de travail du sol raccordable en particulier à un chassis porte-lames devant être attelé à un véhicule tracteur, ainsi qu'une lame équipée d'un tel soc**
Pflugschar zur Bodenbearbeitung, die insbesondere an einen Werkzeugträgerrahmen vor dem Anhängen an eine Zugmaschine gekuppelt werden kann, sowie Klinge, die mit einer solchen Pflugschar ausgestattet ist
Ploughshare blade connectable to a blade-holding frame suitable for being coupled to a tractor vehicle, as well as a ploughshare provided with such a blade

(30) Priorité: 09.04.2010 FR 1052690
(43) Date de publication de la demande: 12.10.2011
(73) Titulaire: UNIA INVESTMENTS Sàrl, 2453 Luxembourg (LU)
(72) Inventeur: Evin, Michel, 44850 Ligne (FR)
(74) Mandataire: Godineau, Valérie

(56) Documents cités:
- BE-A6- 1 008 190
- FR-A1- 2 767 629
- US-A- 5 215 150

## Description

La présente invention concerne un soc pour lame de travail du sol raccordable en particulier à un châssis porte-lames devant être attelé à un véhicule tracteur, ainsi qu'une lame équipée d'un tel soc.

L'invention concerne plus particulièrement un soc destiné à une lame qui comprend, outre le soc, au moins un corps de lame du genre étançon, destiné à être fixé audit châssis porte-lames, ce corps de lame présentant généralement au moins une partie travaillante verticale, ou légèrement inclinée latéralement, par rapport à un plan vertical parallèle à l'axe d'avancement de la lame pour trancher sensiblement verticalement, à la manière d'un coutre, le sol.

Un exemple d'une telle lame est fourni dans la demande internationale WO 97/24024 ou dans le brevet FR 2.767.629.

De telles lames, encore appelées outils aratoires, comportent donc un soc destiné à soulever une bande de terre et un corps de lame à fonction de coutre destiné à trancher la bande de terre soulevée.

Jusqu'à présent, le bord avant ou bord frontal d'attaque du soc qui attaque le sol pour trancher sensiblement horizontalement le sol et soulever une bande de terre est un bord lisse rectiligne. Il en résulte une pénétration difficile du soc dans le sol et une résistance importante à l'avancement qui nécessite de disposer d'un véhicule tracteur de puissance élevée.

Par ailleurs, comme la face du dessus, la face du dessous et le bord d'attaque du soc forment à la manière d'une pelle un ensemble extrêmement fin à surface plane, la terre tend à coller auxdites surfaces.

Il est également connu à travers les documents US-5.215.150 et BE-1.008.190 un soc du type précité, ledit soc, positionnable dans la partie inférieure de la partie travaillante du corps de lame, comprenant au moins une aile apte à s'étendre au moins le long de l'un des cotés de la partie travaillante dudit corps de lame, ladite aile étant munie d'un bord tranchant formé par le bord avant encore appelé bord frontal d'attaque de l'aile, ledit bord avant ou bord frontal d'attaque de l'aile étant muni d'une série de doigts ou dents aptes, à la manière des doigts ou dents d'une fourche, à faciliter la pénétration de l'aile dans le sol.

Un but de la présente invention est donc de proposer un soc et une lame équipée d'un tel soc dont les conceptions permettent de faciliter la pénétration dans le sol du soc.

Un autre but de la présente invention est de proposer un soc et une lame équipée d'un tel soc dont les conceptions permettent d'une part de réduire l'usure du soc, d'autre part d'éviter à la terre de coller à la surface du dessus du soc.

A cet effet, l'invention a pour objet un soc pour lame de travail du sol raccordable en particulier à un châssis porte-lames devant être attelé à un véhicule tracteur, ladite lame étant du type comprenant au moins, outre le soc, un corps de lame du genre étançon, destiné à être fixé audit châssis porte-lames, ce corps de lame présentant généralement au moins une partie travaillante verticale, ou légèrement inclinée latéralement, par rapport à un plan vertical parallèle à l'axe d'avancement de la lame et dans lequel se trouve la partie du corps de lame destinée à être fixée au châssis, ledit soc, positionnable dans la partie inférieure de la partie travaillante du corps de lame, comprenant au moins une aile apte à s'étendre au moins le long de l'un des cotés de la partie travaillante dudit corps de lame, ladite aile étant munie d'un bord tranchant formé par le bord avant encore appelé bord frontal d'attaque de l'aile, ledit bord avant ou bord frontal d'attaque de l'aile étant muni d'une série de doigts ou dents aptes à la manière des doigts ou dents d'une fourche à faciliter la pénétration de l'aile dans le sol, caractérisé en ce qu'au moins deux des doigts ou dents de l'aile ou d'au moins une aile sont séparés l'un de l'autre par une partie concave du bord frontal d'attaque de l'aile.

De préférence, le soc comprend au moins deux ailes réalisées, de préférence, sous forme d'un ensemble d'un seul tenant, lesdites ailes étant positionnables dans la partie inférieure de la partie travaillante du corps de lame, de part et d'autre de la partie travaillante dudit corps de lame, le bord avant ou bord frontal d'attaque de chaque aile étant muni d'une série de doigts ou dents dans la partie inférieure de la partie travaillante du corps de lame, de part et d'autre de la partie travaillante dudit corps de lame, le bord avant ou bord frontal d'attaque de chaque aile étant muni d'une série de doigts ou dents aptes, à la manière des doigts d'une fourche, à faciliter la pénétration de l'aile dans le sol.

De préférence, la face dite du dessus de l'aile, opposée à la face de l'aile destinée à venir en appui au sol, est équipée d'au moins une, de préférence une pluralité de, nervures s'étendant entre le bord frontal avant et le bord arrière de ladite aile sur au moins une partie de la largeur de l'aile.

Ces nervures ont une double fonction. Elles permettent de réduire l'usure des doigts ou dents de l'aile, en particulier lorsque qu'au moins une partie de chaque nervure forme un renflement du dessus du doigt ou dent de l'aile et/ou est disposée dans le prolongement d'un doigt ou dent de l'aile.

Ces nervures permettent encore d'éviter à la terre de coller à la face du dessus généralement plane et lisse de l'aile.

De préférence, au moins une partie des doigts ou dents sont réalisés d'une seule pièce avec ladite aile. De préférence encore, les doigts ou dents s'étendent dans le plan de l'aile. Généralement, ledit soc est une pièce moulée. Ces dispositions permettent l'obtention d'un soc aisé à fabriquer et dont la résistance mécanique est accrue. De préférence, le soc comprend en outre au moins une pointe positionnée le long du bord de l'aile opposé au bord de liaison de l'aile au corps de lame. Il comporte en outre, jouxtant le bord longitudinal dit externe de la pointe, au moins un aileron pour élargir la largeur de la bande de terre travaillée par le soc.

L'invention a encore pour objet une lame en particulier pour un châssis porte-lames devant être attelé à un véhicule tracteur, cette lame comprenant au moins un soc et un corps de lame du genre étançon par l'intermédiaire duquel le soc est apte à être fixé audit châssis porte-lames, ce corps de lame présentant généralement au moins une partie travaillante verticale ou légèrement inclinée latéralement par rapport à un plan vertical parallèle à l'axe d'avancement de la lame et dans lequel se trouve la partie du corps de lame destinée à être fixée au châssis porte-lames, ledit soc positionnable dans la partie inférieure de la partie travaillante du corps de lame comprenant au moins une aile apte à s'étendre au moins le long de l'un des cotés de la partie travaillante du corps de lame, caractérisée en ce que ledit soc est conforme celui décrit ci-dessus.

L'invention sera bien comprise à la lecture de la description suivante d'exemples de réalisation, en référence aux dessins annexés dans lesquels :

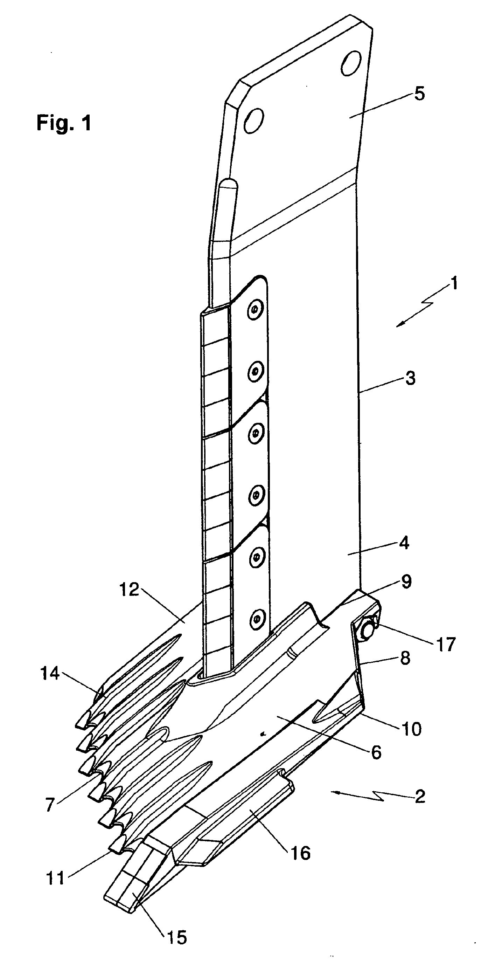

La figure 1 représente une vue en perspective d'une lame conforme à l'invention vue de biais ;

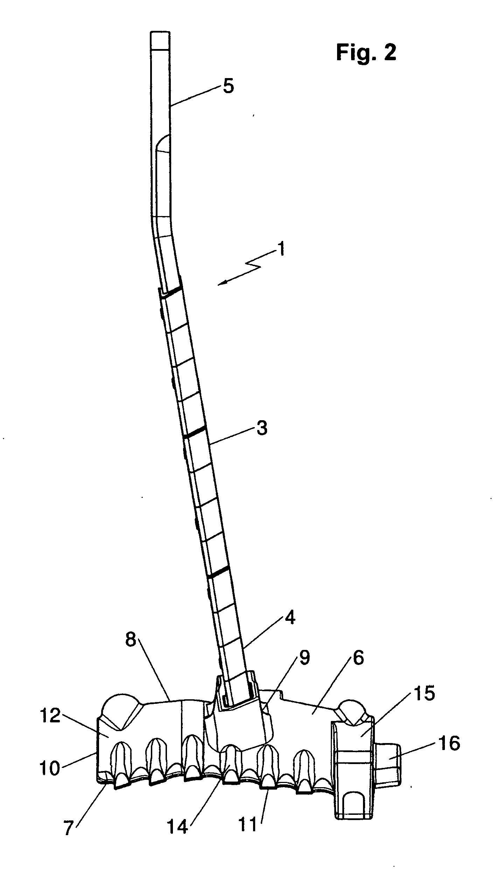

La figure 2 représente une vue de face de la lame de la figure 1 ;

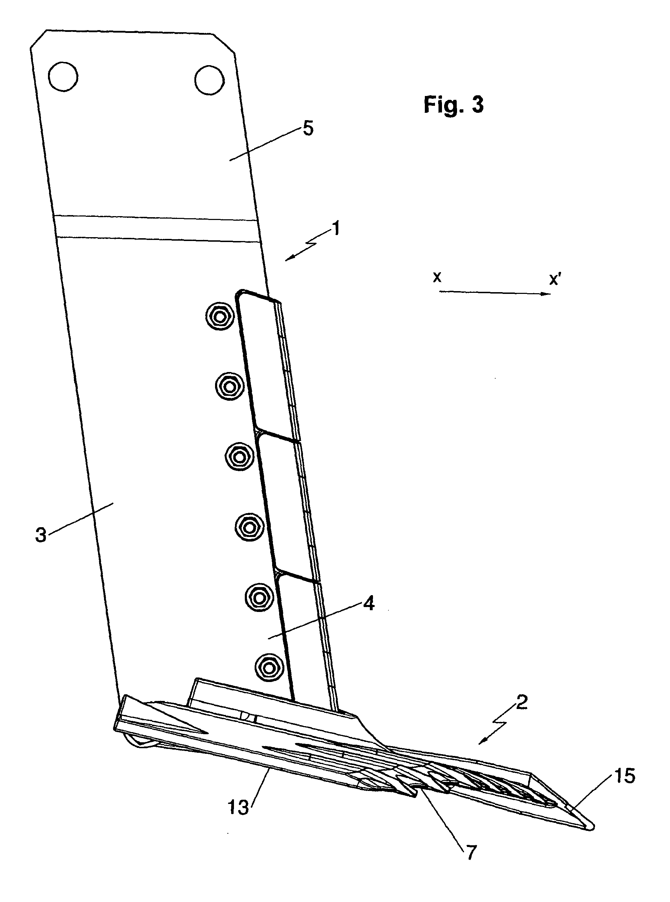

La figure 3 représente une vue de côté de la lame de la figure 1 ;

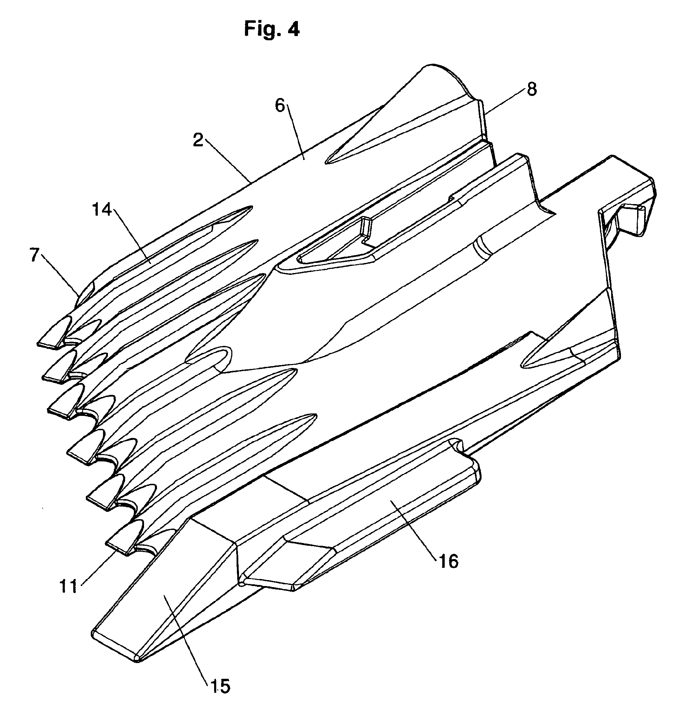

La figure 4 représente une vue en perspective du soc seul vue de 3/4 en élévation ;

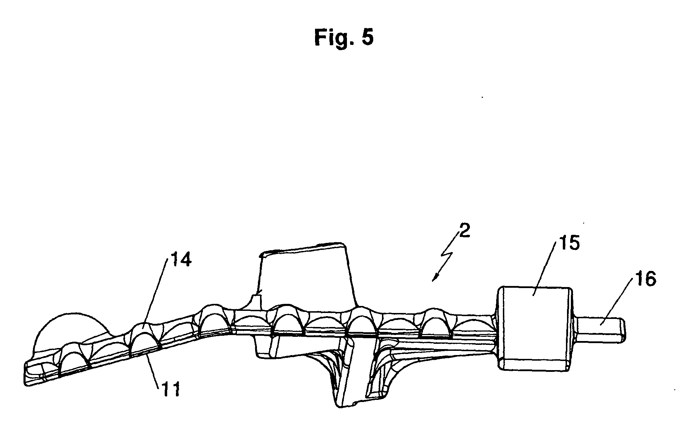

La figure 5 représente une vue de face du soc de la figure 4 ;

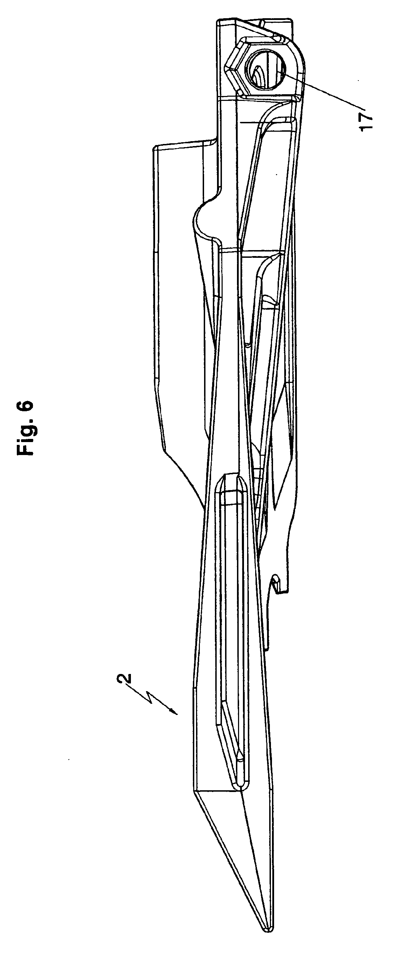

La figure 6 représente une vue de côté du soc de la figure 4.

Comme mentionné ci-dessus, le soc 2, objet de l'invention, est plus particulièrement destiné à former le soc d'une lame de travail du sol raccordable à un châssis porte-lames devant être attelé à un véhicule tracteur. Généralement, un tel châssis porte-lames est équipé d'une pluralité de lames disposées côte à côte le long de la largeur de la bande de terre à travailler. Cette lame 1 comprend généralement, outre le soc 2, un corps 3 de lame du genre étançon présentant généralement au moins une partie 4 travaillante verticale ou légèrement inclinée latéralement par rapport à un plan vertical parallèle à l'axe XX' d'avancement de la lame et dans lequel se trouve la partie 5 du corps 3 de lame destinée à être fixée au châssis.

La partie 4 travaillante verticale ou légèrement inclinée, à fonction de coutre, du corps 3 de lame permet un tranchage du sol dans un plan vertical ou légèrement incliné, c'est-à-dire avec une inclinaison de préférence comprise dans la plage de 0 à 25° par rapport au plan vertical.

La partie 5 du corps 3 de lame destinée à être fixée au châssis est quant à elle munie généralement d'au moins deux perçages traversant pour une fixation par boulonnage du corps 3 de lame au châssis porte-lames.

Le corps 3 de lame comporte donc un bord d'attaque tranchant, un bord arrière et deux flancs ou côtés reliant les bords d'attaque et arrière dudit corps 3 de lame.

Le soc 2 est destiné à être positionné ou disposé dans, c'est-à-dire au niveau de, la partie inférieure de la partie 4 travaillante du corps 3 de lame, c'est-à-dire dans, ou au niveau de, la partie du corps 3 de lame opposé à la partie 5 du corps de lame destinée à être fixée au châssis.

Le soc 2 est donc destiné à être positionné dans la partie du corps 3 de lame destinée à pénétrer dans le sol.

Ce soc 2 peut former avec le corps 3 de lame un ensemble indémontable ou être relié de manière amovible audit corps 3 de lame. Ce soc peut être réalisé indifféremment en un ou plusieurs éléments. De préférence, ledit soc 2 est une pièce moulée. Au moins une partie des doigts 11 ou dents sont réalisés d'une seule pièce avec ladite aile 6. L'ensemble est réalisé en métal, par exemple en acier.

C'est la seconde solution, à savoir un soc 2 relié de manière amovible au corps 3 de lame, qui est retenue dans les figures où le soc 2 est fixé audit corps 3 de lame par boulonnage. Mais le soc 2 aurait pu de manière équivalente être fixé audit corps 3 de lame par soudure.

Ce soc 2 comprend au moins une aile 6 apte à s'étendre au moins le long de l'un des côtés ou flancs de la partie 4 travaillante dudit corps 3 de lame. Cette aile 6 est munie d'un bord 7 tranchant formé par le bord 7 avant, encore appelé bord 7 frontal d'attaque de l'aile.

Cette aile 6 forme donc au moins un prolongement latéral dudit corps de lame pris par rapport au sens d'avancement dudit corps 3 de lame. Cette aile 6 est généralement à incidence positive en direction du sol, c'est-à-dire inclinée depuis son bord 8 arrière vers son bord 7 avant en formant une pente descendante.

De préférence, et comme représenté aux figures, le soc 2 comprend au moins deux ailes 6 réalisées de préférence sous forme d'un ensemble d'un seul tenant, lesdites ailes 6 étant positionnables dans la partie inférieure de la partie 4 travaillante du corps 3 de lame de part et d'autre de la partie 4 travaillante dudit corps 3 de lame.

Indépendamment du nombre d'ailes équipant le soc et de manière caractéristique à l'invention, la ou chaque aile est munie d'un bord 7 avant ou bord 7 frontal d'attaque de l'aile, ce bord 7 avant étant équipé d'une série de doigts 11 ou dents apte, à la manière de doigts ou dents d'une fourche, à faciliter la pénétration de l'aile 6 dans le sol. Ces doigts s'étendent dans le plan de l'aile.

Dans les exemples représentés, lesdites ailes 6 sont reliées, entre elles dans une zone destinée à être positionnée en avant du bord d'attaque du corps 3 de lame pris par rapport au sens d'avancement de la lame, de sorte que lesdites ailes forment avec leur zone de jonction vue de dessus, un U couché.

L'espace laissé libre entre les branches du U permet l'insertion du corps 3 de lame et sa fixation au soc 2. Ces ailes forment donc une seule et même pièce. Le soc aurait pu de manière équivalente être réalisé à l'aide de deux ailes indépendantes, le bord avant du corps 3 de lame venant dans ce cas au niveau du bord d'attaque d'au moins l'une des ailes.

Les bords 7 avant des ailes peuvent être disposés au même niveau par rapport au sens d'avancement XX' de la lame. Ces bords 7 avant peuvent, de manière équivalente, être disposés décalés l'un par rapport à l'autre par rapport au sens d'avancement de la lame de telle sorte que le bord d'attaque de l'une des ailes est disposé en avant du bord d'attaque de l'autre aile. Ce mode de réalisation correspond à celui qui est représenté.

Dans les exemples représentés, le soc 2 pour lame 1 de travail du sol est caractérisé en ce que la face 12 dite du dessus de l'aile 6, opposée à la face 13 de l'aile 6 destinée à venir en appui au sol, est équipée d'au moins une, de préférence une pluralité de, nervures 14 s'étendant entre le bord 7 frontal avant et le bord 8 arrière de ladite aile 6 sur au moins une partie de la largeur de l'aile.

Ces nervures 14 sont, de préférence, réalisées d'une seule pièce avec ladite aile. De même, nervures 14 et doigts 11 sont de préférence réalisés d'une seule pièce.

De préférence, les nervures 14 s'étendent sur au moins un cinquième de la distance séparant les bords 7, 8 avant et arrière de l'aile.

De préférence encore, au moins une partie de chaque nervure 14 est disposée dans le prolongement d'un doigt 11 ou dent de l'aile 6 et forme au moins une partie de chaque nervure 14 un renflement du dessus du doigt 11 ou dent de l'aile. Ainsi, une partie de la nervure 14 surmonte le doigt 11 ou dent de l'aile et vient le renforcer tandis qu'une autre partie de la nervure 14 en prolongement de la première partie permet d'éviter à la terre de coller à la face du dessus de l'aile.

Généralement, au moins deux des doigts 11 ou dents de l'aile 6, ou d'au moins une aile 6, sont séparés l'un de l'autre par une partie concave du bord 7 frontal d'attaque de l'aile 6.

Dans les exemples représentés, le soc comporte six doigts sensiblement parallèles surmontés chacun d'une nervure, la partie du bord d'attaque du soc séparant deux doigts étant à chaque fois réalisée concave.

De préférence, le soc 2 comprend en outre au moins une pointe 15 positionnée le long du bord 10 de l'aile 6 opposé au bord 9 de liaison de l'aile 6 au corps 3 de lame.

Généralement, le soc 2 comporte en outre, jouxtant le bord longitudinal dit externe de la pointe 15 au moins un aileron 16 pour élargir la largeur de la bande de terre travaillée par le soc 2.

Cet aileron 16 sert également d'éléments de renfort à la pointe 15 qui encaisse un grand nombre d'efforts. Généralement, la pointe 15 est une pièce d'usure, c'est-à-dire une pièce amovible qui équipe l'aile à bord d'attaque le plus en avant. Toutefois, la pointe 15 peut également former avec l'aile un ensemble monobloc indémontable. Cette pointe 15 délimite un bord frontal disposé en amont du bord d'attaque de l'aile à bord d'attaque le plus en avant par rapport à l'axe d'avancement XX' du châssis de la lame. Cette pointe est donc disposée dans le prolongement latéral de l'aile à bord d'attaque le plus en avant.

Le bord d'attaque de la partie 4 travaillante du corps 3 de lame est également disposé par rapport à l'axe XX' d'avancement de la lame au même niveau ou en aval du bord d'attaque de l'aile à bord d'attaque le plus en avant.

Comme mentionné ci-dessus, le soc, qui peut être formé en un ou plusieurs éléments, peut être rapporté sur le corps 3 de lame. Dans ce cas, le soc 2 est équipé, côté face du dessous d'appui au sol de l'aile ou d'au moins l'une des ailes, d'un passage 17 traversant à l'intérieur duquel est apte à être inséré un boulon de raccordement du soc 2 au corps 3 de la lame.

Comme mentionné ci-dessus, l'invention a encore pour objet une lame comprenant au moins un corps 3 de lame et un soc du type précité, solidaire ou solidarisable au corps 3 de lame.

## Revendications

1. Soc (2) pour lame (1) de travail du sol raccordable en particulier à un châssis porte-lames devant être attelé à un véhicule tracteur, ladite lame (1) étant du type comprenant au moins, outre le soc (2), un corps (3) de lame du genre étançon, destiné à être fixé audit châssis porte-lames, ce corps de lame présentant généralement au moins une partie (4) travaillante verticale, ou légèrement inclinée latéralement, par rapport à un plan vertical parallèle à l'axe (XX') d'avancement de la lame et dans lequel se trouve la partie (5) du corps (3) de lame destinée à être fixée au châssis, ledit soc (2), positionnable dans la partie inférieure de la partie (4) travaillante du corps (3) de lame, comprenant au moins une aile (6) apte à s'étendre au moins le long de l'un des cotés de la partie (4) travaillante dudit corps (3) de lame, ladite aile (6) étant munie d'un bord (7) tranchant formé par le bord (7) avant encore appelé bord (7) frontal d'attaque de l'aile, ledit bord (7) avant ou bord (7) frontal d'attaque de l'aile (6) étant muni d'une série de doigts (11) ou dents aptes, à la manière des doigts ou dents d'une fourche, à faciliter la pénétration de l'aile (6) dans le sol, **caractérisé en ce qu'**au moins deux des doigts (11) ou dents d'au moins une aile (6) sont séparés l'un de l'autre par une partie concave du bord (7) frontal d'attaque de l'aile (6).

2. Soc (2) pour lame (1) de travail du sol selon la revendication 1, **caractérisé en ce qu'**il comprend au moins deux ailes (6) réalisées, de préférence, sous forme d'un ensemble d'un seul tenant, lesdites ailes (6) étant positionnables dans la partie inférieure de la partie (4) travaillante du corps (3) de lame, de part et d'autre de la partie (4) travaillante dudit corps (3) de lame, le bord (7) avant ou bord frontal d'attaque de chaque aile (6) étant muni d'une série de doigts (11) ou dents aptes, à la manière des doigts d'une fourche, à faciliter la pénétration de l'aile dans le sol.

3. Soc (2) pour lame (1) de travail du sol selon l'une des revendications 1 ou 2, **caractérisé en ce que** la face (12) dite du dessus de l'aile (6), opposée à la face (13) de l'aile (6) destinée à venir en appui au sol, est équipée d'au moins une, de préférence une pluralité de, nervures (14) s'étendant entre le bord (7) frontal avant et le bord (8) arrière de ladite aile (6) sur au moins une partie de la largeur de l'aile.

4. Soc (2) pour lame (1) de travail du sol selon la revendication 3, **caractérisé en ce que** les nervures (14) s'étendent sur au moins un cinquième de la distance séparant les bords (7, 8) avant et arrière de l'aile.

5. Soc (2) pour lame (1) de travail du sol selon l'une quelconque des revendications 3 ou 4, **caractérisée en ce qu'**au moins une partie de chaque nervure (14) est disposée dans le prolongement d'un doigt (11) ou dent de l'aile (6), nervure (14) et aile (6) étant réalisés d'une seule pièce.

6. Soc (2) pour lame (1) de travail du sol selon l'une quelconque des revendications 3 à 5, **caractérisé en ce qu'**au moins une partie de chaque nervure (14) forme un renflement du dessus du doigt (11) ou dent de l'aile.

7. Soc (2) pour lame (1) de travail du sol selon l'une quelconque des revendications 1 à 6, **caractérisé en ce que** les doigts (11) s'étendent de manière sensiblement parallèle entre eux.

8. Soc (2) pour lame (1) de travail du sol selon l'une quelconque des revendications 1 à 7, **caractérisé en ce qu'**au moins une partie des doigts (11) ou dents sont réalisés d'une seule pièce avec ladite aile (6).

9. Soc (2) pour lame (1) de travail du sol selon l'une quelconque des revendications 1 à 8, **caractérisé en ce que** les doigts (11) ou dents s'étendent dans le plan de l'aile.

10. Soc (2) pour lame (1) de travail du sol selon l'une quelconque des revendications 1 à 9, **caractérisé en ce que** ledit soc (2) est une pièce moulée.

11. Soc (2) pour lame (1) de travail du sol selon l'une quelconque des revendications 1 à 10, **caractérisé en ce qu'**il comprend en outre au moins une pointe (15) positionnée le long du bord (10) de l'aile (6) opposé au bord (9) de liaison de l'aile (6) au corps (3) de lame.

12. Soc (2) pour lame (1) de travail du sol selon la revendication 11, **caractérisé en ce qu'**il comporte en outre, jouxtant le bord longitudinal dit externe de la pointe (15), au moins un aileron (16) pour élargir la largeur de la bande de terre travaillée par le soc (2).

13. Soc (2) pour lame (1) de travail du sol selon l'une quelconque des revendications 1 à 12, **caractérisé en ce que** le soc (2) est équipé, côté face du dessous d'appui au sol de l'aile ou d'au moins l'une des ailes, d'un passage (17) traversant à l'intérieur duquel est apte à être inséré un boulon de raccordement du soc (2) au corps (3) de la lame.

14. Lame (1) en particulier pour un châssis porte-lames devant être attelé à un véhicule tracteur, cette lame (1) comprenant au moins un soc (2) et un corps (3) de lame du genre étançon par l'intermédiaire duquel le soc (2) est apte à être fixé audit châssis porte-lames, ce corps (3) de lame présentant généralement au moins une partie (4) travaillante verticale ou légèrement inclinée latéralement par rapport à un plan vertical parallèle à l'axe (XX') d'avancement de la lame (1) et dans lequel se trouve la partie (5) du corps (3) de lame destinée à être fixée au châssis porte-lames, ledit soc (2) positionnable dans la partie inférieure de la partie (4) travaillante du corps (3) de lame comprenant au moins une aile (6) apte à s'étendre au moins le long de l'un des cotés de la partie (4) travaillante du corps (3) de lame, **caractérisée en ce que** ledit soc (2) est conforme à l'une des revendications 1 à 13.

## Patentansprüche

1. Pflugschar (2) für Klinge (1) zur Bodenbearbeitung, die insbesondere an einen Werkzeugträgerrahmen koppelbar ist, der an eine Zugmaschine anzuhängen ist, wobei die Klinge (1) der Bauart ist, die mindestens, neben der Pflugschar (2), einen Klingenkörper (3) in der Art einer Stütze umfasst, der dazu bestimmt ist, am Werkzeugträgerrahmen befestigt zu sein, wobei dieser Klingenkörper im Allgemeinen mindestens einen vertikalen oder im Verhältnis zu einer vertikalen Ebene parallel zur Vorschubachse (XX') der Klinge seitlich leicht geneigten Arbeitsabschnitt (4) aufweist und in dem sich der Abschnitt (5) des Klingenkörpers (3) befindet, der dazu bestimmt ist, am Rahmen befestigt zu sein, wobei die Pflugschar (2), die im unteren Abschnitt des Arbeitsabschnitts (4) des Klingenkörpers (3) positionierbar ist, mindestens einen Flügel (6) umfasst, der imstande ist, sich mindestens entlang einer der Seiten des Arbeitsabschnitts (4) des Klingenkörpers (3) zu erstrecken, wobei der Flügel (6) mit einer Schneidkante (7) ausgestattet ist, die von der vorderen Kante (7) gebildet wird, die auch als frontale Angriffskante (7) des Flügels bezeichnet wird, wobei die vordere Kante (7) oder frontale Angriffskante (7) des Flügels (6) mit einer Reihe von Fingern (11) oder Zähnen ausgestattet ist, die imstande sind, in der Art der Finger oder Zähne einer Gabel das Eindringen des Flügels (6) in den Boden zu erleichtern,
**dadurch gekennzeichnet, dass** mindestens zwei der Finger (11) oder Zähne mindestens eines Flügels (6) voneinander durch einen konkaven Abschnitt des frontalen Angriffsrands (7) des Flügels (6) getrennt sind.

2. Pflugschar (2) für Klinge (1) zur Bodenbearbeitung nach Anspruch 1, **dadurch gekennzeichnet, dass** sie mindestens zwei Flügel (6) umfasst, die vorzugsweise in Form einer Gruppe aus einem Stück hergestellt sind, wobei die Flügel (6) im unteren Abschnitt des Arbeitsabschnitts (4) des Klingenkörpers (3) auf der einen und der anderen Seite des Arbeitsabschnitts (4) des Klingenkörpers (3) positionierbar sind, wobei die Vorderkante (7) oder die frontale Angriffskante jedes Flügels (6) mit einer Reihe von Fingern (11) oder Zähnen ausgestattet ist, die imstande sind, in der Art der Finger einer Gabel das Eindringen des Flügels in den Boden zu erleichtern.

3. Pflugschar (2) für Klinge (1) zur Bodenbearbeitung nach einem der Ansprüche 1 oder 2, **dadurch gekennzeichnet, dass** die Oberseite (12) des Flügels (6), die der Seite (13) des Flügels (6) gegenüberliegt, die dazu bestimmt ist, sich auf dem Boden abzustützen, mit mindestens einer Rippe, vorzugsweise einer Vielzahl von Rippen (14), ausgestattet ist, die sich zwischen der frontalen Vorderkante (7) und der hinteren Kante (8) des Flügels (6) über mindestens einen Abschnitt der Breite des Flügels erstrecken.

4. Pflugschar (2) für Klinge (1) zur Bodenbearbeitung nach Anspruch 3, **dadurch gekennzeichnet, dass** sich die Rippen (14) über mindestens ein Fünftel des Abstands erstrecken, der die vordere und hintere Kante (7, 8) des Flügels trennt.

5. Pflugschar (2) für Klinge (1) zur Bodenbearbeitung nach einem der Ansprüche 3 oder 4, **dadurch gekennzeichnet, dass** mindestens ein Abschnitt jeder Rippe (14) in der Verlängerung eines Fingers (11) oder Zahns des Flügels (6) angeordnet ist, wobei Rippe (14) und Flügel (6) in einem einzigen Teil hergestellt sind.

6. Pflugschar (2) für Klinge (1) zur Bodenbearbeitung nach einem der Ansprüche 3 bis 5, **dadurch gekennzeichnet, dass** mindestens ein Abschnitt jeder Rippe (14) eine Verdickung auf der Oberseite des Fingers (11) oder Zahns des Flügels bildet.

7. Pflugschar (2) für Klinge (1) zur Bodenbearbeitung nach einem der Ansprüche 1 bis 6, **dadurch gekennzeichnet, dass** sich die Finger (11) etwa parallel zueinander erstrecken.

8. Pflugschar (2) für Klinge (1) zur Bodenbearbeitung nach einem der Ansprüche 1 bis 7, **dadurch gekennzeichnet, dass** mindestens ein Abschnitt der Finger (11) oder Zähne mit dem Flügel (6) aus einem Stück hergestellt ist.

9. Pflugschar (2) für Klinge (1) zur Bodenbearbeitung nach einem der Ansprüche 1 bis 8, **dadurch gekennzeichnet, dass** sich die Finger (11) oder Zähne in der Ebene des Flügels erstrecken.

10. Pflugschar (2) für Klinge (1) zur Bodenbearbeitung nach einem der Ansprüche 1 bis 9, **dadurch gekennzeichnet, dass** die Pflugschar (2) ein Formteil ist.

11. Pflugschar (2) für Klinge (1) zur Bodenbearbeitung nach einem der Ansprüche 1 bis 10, **dadurch gekennzeichnet, dass** sie ferner mindestens eine Spitze (15) umfasst, die entlang der Kante (10) des Flügels (6) positioniert ist, die der Verbindungskante (9) des Flügels (6) mit dem Klingenkörper (3) gegenüberliegt.

12. Pflugschar (2) für Klinge (1) zur Bodenbearbeitung nach Anspruch 11, **dadurch gekennzeichnet, dass** sie ferner neben dem äußeren Längsrand der Spitze (15) mindestens einen kleinen Flügel (16) aufweist, um die Breite des von der Pflugschar (2) bearbeiteten Bodenstreifens zu verbreitern.

13. Pflugschar (2) für Klinge (1) zur Bodenbearbeitung nach einem der Ansprüche 1 bis 12, **dadurch gekennzeichnet, dass** die Pflugschar (2) auf der unteren Bodenabstützseite des Flügels oder mindestens eines der Flügel mit einer durchgehenden Passage (17) ausgestattet ist, in die ein Verbindungsbolzen der Pflugschar (2) mit dem Klingenkörper (3) einführbar ist.

14. Klinge (1), insbesondere für einen Werkzeugträgerrahmen, der an eine Zugmaschine anzuhängen ist, wobei diese Klinge (1) mindestens eine Pflugschar (2) und einen Klingenkörper (3) in der Art einer Stütze umfasst, anhand dessen die Pflugschar (2) imstande ist, am Werkzeugträgerrahmen befestigt zu sein, wobei dieser Klingenkörper (3) im Allgemeinen mindestens einen vertikalen oder im Verhältnis zu einer vertikalen Ebene parallel zur Vorschubachse (XX') der Klinge seitlich leicht geneigten Arbeitsabschnitt (4) aufweist und in dem sich der Abschnitt (5) des Klingenkörpers (3) befindet, der dazu bestimmt ist, am Werkzeugträgerrahmen befestigt zu sein, wobei die Pflugschar (2), die im unteren Abschnitt des Arbeitsabschnitts (4) des Klingenkörpers (3) positionierbar ist, mindestens einen Flügel (6) umfasst, der imstande ist, sich mindestens entlang einer der Seiten des Arbeitsabschnitts (4) des Klingenkörpers (3) zu erstrecken, **dadurch gekennzeichnet, dass** die Pflugschar (2) einem der Ansprüche 1 bis 13 entspricht.

## Claims

1. A ploughshare (2) for soil working blade (1) connectable in particular to a blade-holding frame suitable for being coupled to a tractor vehicle, said blade (1) comprising at least, in addition to the ploughshare (2), a blade body (3) of the leg type, designed to be fastened to said blade-holding frame, said blade body generally having at least one working portion (4) that is vertical or slightly laterally inclined relative to a vertical plane parallel to the travel axis (XX') of the blade and in which the portion (5) of the blade body (3) is located that is designed to be fastened to the frame, said plowshare (2), which may be positioned in the lower portion of the working portion (4) of the blade body (3), comprising at least one wing (6) capable of extending at least along one of the sides of the working portion (4) of said blade body (3), said wing (6) being provided with a cutting edge (7) formed by the front edge (7), also called the leading edge (7) of the wing, said front edge (7) or leading edge (7) of the wing (6) being provided with a series of fingers (11) or teeth capable, like the fingers or teeth of a fork, of facilitating penetration of the wing (6) in the ground, **characterized in that** at least two of the fingers (11) or teeth of at least one wing (6) are separated from one another by a concave portion of the leading edge (7) of the wing (6).

2. The plowshare (2) for soil working blade (1) according to claim 1, **characterized in that** it comprises at least two wings (6) preferably made in the form of a single-piece set, said wings (6) being able to be positioned in the lower portion of the working portion (4) of the blade body (3), on either side of the working portion (4) of said blade body (3), the front edge or leading edge (7) of each wing (6) being provided with a series of fingers (11) or teeth capable, like the fingers of a fork, of facilitating penetration of the wing in the ground.

3. The plowshare (2) for soil working blade (1) according to one of claims 1 or 2, **characterized in that** the so-called top surface (12) of the wing (6), opposite the surface (13) of the wing (6) designed to bear on the ground, is equipped with at least one, and preferably a plurality of ribs (14) extending between the front edge (7) and the back edge (8) of said wing (6) over at least part of the width of the wing.

4. The plowshare (2) for soil working blade (1) according to claim 3, **characterized in that** the ribs (14) extend over at least one fifth of the distance separating the front and rear edges (7, 8) of the wing.

5. The plowshare (2) for soil working blade (1) according to any one of claims 3 or 4, **characterized in that** at least part of each rib (14) is positioned in the extension of a finger (11) or tooth of the wing (6), the rib (14) and wing (6) being made in a single piece.

6. The plowshare (2) for soil working blade (1) according to any one of claims 3 to 5, **characterized in that** at least part of each rib (14) forms a boss above the finger (11) or tooth of the wing.

7. The plowshare (2) for soil working blade (1) according to any one of claims 1 to 6, **characterized in that** the fingers (11) extend substantially parallel to one another.

8. The plowshare (2) for soil working blade (1) according to any one of claims 1 to 7, **characterized in that** at least part of the fingers (11) or teeth are made in a single piece with said wing (6).

9. The plowshare (2) for soil working blade (1) according to any one of claims 1 to 8, **characterized in that** the fingers (11) or teeth extend in the plane of the wing.

10. The plowshare (2) for soil working blade (1) according to any one of claims 1 to 9, **characterized in that** said plowshare (2) is a molded piece.

11. The plowshare (2) for soil working blade (1) according to any one of claims 1 to 10, **characterized in that** it also comprises at least one tip (15) positioned along the edge (10) of the wing (6) opposite the edge (9) connecting the wing (6) to the blade body (3).

12. The plowshare (2) for soil working blade (1) according to claim 11, **characterized in that** it also includes, adjacent to the so-called outer longitudinal edge of the tip (15), at least one fin (16) to widen the width of the strip of dirt worked by the plowshare (2).

13. The plowshare (2) for soil working blade (1) according to any one of claims 1 to 12, **characterized in that** the plowshare (2) is equipped, on the surface side of the bottom of the wing or at least one of the wings bearing on the ground, with a through passage (17) inside which a bolt can be inserted for connecting the plowshare (2) to the body (3) of the blade.

14. A blade (1), in particular for a blade-holding frame suitable for being coupled to a tractor vehicle, said blade (1) comprising at least one ploughshare (2) and a blade body (3) of the leg type by means of which the ploughshare (2) can be fastened to said blade-holding frame, said blade body (3) generally having at least one working portion (4) that is vertical or slightly laterally inclined relative to a vertical plane parallel to the travel axis (XX') of the blade (1) and in which the portion (5) of the blade body (3) is located that is designed to be fastened to the frame, said plowshare (2), which may be positioned in the lower portion of the working portion (4) of the blade body (3), comprising at least one wing (6) capable of extending at least along one of the sides of the working portion (4) of the blade body (3), **characterized in that** said ploughshare (2) is according to one of claims 1 to 13.
